# EUROPÄISCHE PATENTSCHRIFT

(11) **EP 0 487 652 B1**
(45) Veröffentlichungstag und Bekanntmachung des Hinweises auf die Patenterteilung: **27.12.1995**
(21) Anmeldenummer: 90917938.4
(22) Anmeldetag: 18.07.1990
(51) Int. Cl.: G01N 27/406

(54) **ELEKTROCHEMISCHER MESSFÜHLER**
ELECTROCHEMICAL SENSOR
CAPTEUR ELECTROCHIMIQUE

(30) Priorität: 18.08.1989 DE 3927283
(43) Veröffentlichungstag der Anmeldung: 03.06.1992
(73) Patentinhaber: ROBERT BOSCH GMBH, 70442 Stuttgart (DE)
(72) Erfinder: FRIESE, Karl-Hermann, D-7250 Leonberg (DE); WEYL, Helmut, D-7141 Schwieberdingen (DE); WIELAND, Werner, D-7014 Kornwestheim (DE)
(86) Internationale Anmeldenummer: DE9000539
(87) Internationale Veröffentlichungsnummer: WO9102970

(56) Entgegenhaltungen:
- DE-A- 2 619 746
- DE-A- 2 852 647
- DE-C- 3 735 298
- US-A- 4 452 687
- US-A- 4 786 399

## Beschreibung

### Stand der Technik

Die Erfindung betrifft einen elektrochemischen Meßfühler für die Bestimmung des Sauerstoffgehaltes in Abgasen nach der Gattung des Hauptanspruchs.

Es ist allgemein bekannt, für die Bestimmung des Sauerstoffgehaltes in Abgasen, insbesondere in Abgasen von Verbrennungsmotoren, elektrochemische Meßfühler - oftmals auch als λ-Sonden bezeichnet - zu verwenden.

Bekannte derartige Meßfühler beruhen auf dem Prinzip der Sauerstoffkonzentrationskette mit einem ionenleitenden Festelektrolyten. Sie bestehen z. B. aus einem einseitig geschlossenen Rohr aus einem ionenleitenden Festelektrolyten, auf dessen äußerer, dem Abgas zugewandten Oberfläche sich eine Elektrode befindet, die z. B. aus einer porösen Platinschicht bestehen kann, die gleichzeitig eine möglichst weitgehende Einstellung des thermodynamischen Gleichgewichts katalysiert. Eine derartige Einstellung des Gasgleichgewichts ist erforderlich, da sich das Gas im allgemeinen nicht von vornherein im thermodynamischen Gleichgewicht befindet, dies aber Voraussetzung dafür ist, daß bei λ = 1 ein möglichst scharfer Potentialsprung auftritt oder im Falle einer polarographischen Grenzstromsonde (vgl. DE-PS 27 11 880) der jeweilige tatsächliche λ-Wert erfaßt wird.

Die Elektrodenschicht, z. B. Platinschicht ist bei diesen Meßfühlern sehr dünn und obwohl sie im allgemeinen eine poröse keramische Schutzschicht trägt, unterliegt sie doch nach längerem Gebrauch einem korrosiven Angriff durch einige der Abgasbestandteile, z. B. Ruß, Blei sowie Phosphor- und Schwefelverbindungen. Dieser korrosive Angriff findet auf der gesamten Fläche des Meßfühlers statt, ist aber besonders stark gegen das offene Ende hin, wo sich infolge einer niedrigeren Temperatur diese schädlichen Bestandteile leichter niederschlagen und nicht so leicht wieder verflüchtigen und wo die Elektrodenschicht unter Umständen nicht mehr vollständig von der porösen und damit ohnehin nur begrenzt wirksamen Schutzschicht bedeckt ist.

Aus der DE-AS 26 19 746 ist ein elektrochemischer Meßfühler bekannt, der auf der äußeren, dem Abgas zugewandten Oberfläche des Festelektrolytkörpers oder Sondensteins eine elektronenleitende Schicht in Form einer Leiterbahn aus einem Gemisch von elektronenleitendem, die Einstellung des Gasgleichgewichtes katalysierendem Material und gegebenenfalls keramischem Material oder Glas als Stützgerüst aufweist, das sich vom geschlossenen Ende bis zum offenen Ende hin erstreckt und bei dem der dem offenen Ende des Rohres zugewandte Teil der Leiterbahn mit einer Glasur, zum Beispiel aus Kalium-Aluminiumsilikat, Barium-Aluminium- oder Barium-Calcium-Aluminiumsilikat bedeckt ist. Der Sondenstein weist am offenen Ende einen Bund auf, der zum geschlossenen Ende hin sich konisch verjüngt und dabei eine Dichtkehle zum gasdichten Einsetzen in ein Gehäuse ausbildet. Die Kontaktierung der Leiterbahn wird außerhalb der Dichtkehle am offenen Ende des Sondensteins vorgenommen.

Es hat sich jedoch gezeigt, daß die Abdeckung der Leiterbahn mit einer Glasur, wie in der DE-AS 26 19 746 beschrieben, mehrere schwerwiegende Nachteile aufweist. Nachteilig an der Verwendung derartiger Deckschichten ist zunächst, daß diese Deckschichten nur nach dem Sinterprozeß aufgetragen werden können. Nachteilig ist ferner, daß in den auf den Glasuren erzeugten Deckschichten aufgrund ihrer von der Sondenkeramik sehr unterschiedlichen stofflichen Zusammensetzung und damit unterschiedlichen Wärmeausdehnung beim Betrieb der Meßfühler leicht Risse auftreten, die lokal die Leiterbahnen leicht einem Angriff aussetzen.

Bei dem aus der DE-PS 37 35 298 bekannten Meßfühler werden die Nachteile des aus der DE-AS 26 19 746 bekannten Meßfühlers dadurch behoben, daß die Deckschicht aus der Rohstoffmischung der Sondensteinkeramik mit gleicher oder erhöhter Sinteraktivität, beispielsweise aus stabilisiertem ZrO₂, dem gegebenenfalls ein Flußmittel beigemischt ist, erzeugt wird.

Es hat sich jedoch gezeigt, daß auch bei diesen Meßfühlern, bei denen die Deckschichten der Leiterbahnen auf der Referenzgasseite des Sondensteins nicht bis unter den metallischen Dichtring geführt werden, die Lebensdauer, insbesondere bei heißen Applikationen oder bei Betrieb mit Pb-Benzin, noch nicht voll befriedigt.

### Vorteile der Erfindung

Der erfindungsgemäße elektrochemische Meßfühler, bei dem die die Leiterbahn abdeckende Deckschicht auf der Referenzgasseite des Sondensteins bis unter den metallischen Dichtring geführt ist, hat gegenüber den bekannten elektrochemischen Meßfühlern, z. B. des aus der DE-PS 37 35 298 und der DE-AS 26 19 746 bekannten Typs, wesentliche Vorteile.

Überraschenderweise hat sich gezeigt, daß sich die Lebensdauer elektrochemischer Meßfühler des beschriebenen Typs ganz wesentlich dadurch verlängern läßt, daß man die anschlußseitige äußere Leiterbahn vor chemischen und erosiven Angriff im Kontaktbereicht schützt, indem man die Deckschicht bis unter den metallischen Dichtring führt. Erst hier liegt die eigentliche Leiterbahn frei und wird vom geschützten Bereich zur Kontaktstelle am Dichtring geführt.

Die Deckschicht kann die Außenleiterbahn abgasseitig vollständig oder nur teileweise abdecken, da primär eine Totalunterbrechnung verhindert werden soll.

Der in der Regel fingerförmige Sondenstein des erfindungsgemäßen Meßfühlers kann aus einem der zur Herstellung derartiger Meßfühler üblichen ionenleitenden Festelektrolyten bestehen. In typischer Weise besteht der Sondenstein beispielsweise aus stabilisiertem Zirkondioxid, z. B. aus mit Yttriumoxid oder Calciumoxid stabilisiertem ZrO₂. Außer aus stabilisiertem ZrO₂ kann der Sondenstein beispielsweise jedoch auch aus Festelektrolyten auf Basis von CeO₂, HfO₂ oder ThO₂ aufgebaut sein, die, z. B. mit CaO, MgO, SrO, YbO₃ und/oder Sc₂O₃ stabilisiert sein können.

Gemäß einer vorteilhaften Ausgestaltung der Erfindung besteht die Deckschicht aus einer dicht sinternden Deckschicht aus der Rohstoffmischung der Sondensteinkeramik mit gleicher oder erhöhter Sinteraktivität.

Besteht der Sondenstein somit beispielsweise aus mit 5 Mol-% Yttriumoxid stabilisiertem ZrO₂, so kann zur Erzeugung der Deckschicht ebenfalls ein derart stabilisiertes ZrO₂ verwendet werden.

Die prozentuale Zusammensetzung der zur Ausbildung der Deckschicht verwendeten Rohstoffmischung braucht jedoch nicht der Zusammensetzung des Sondensteins zu entsprechen. In vorteilhafter Weise werden jedoch die gleichen oder gleichartige Rohstoffe eingesetzt, wobei die prozentuale Zusammensetzung auch voneinander abweichen kann. Dies bedeutet, daß der Stabilisatorgehalt der zur Ausbildung der Deckschicht verwendeten Rohstoffmischung, z. B. um bis zu 20% vom Stabilisatorgehalt der Rohstoffmischung des Sondensteins abweichen kann.

Zur Erzeugung der Deckschicht kann beispielsweise auch eine Rohstoffmischung mit erhöhter Sinteraktivität verwendet werden. Eine erhöhte Sinteraktivitiät erreicht man z. B. durch eine verschärfte Aufmahlung und/oder durch Zusatz eines silikatischen Flußmittels, z. B. durch Zusatz von Al-, Ba- oder Ba-Al-Silikat. Derartige Zusätze können der Rohstoffmischung, z. B. in Mengen von etwa 5 Gew.-%, bezogen auf die Rohstoffmischung zugegeben werden.

In vorteilhafter Weise werden zur Herstellung der Deckschichten Spritzsuspensionen oder Druckpasten verwendet, wie sie in der DE-PS 37 35 298 näher beschrieben werden.

Vorzugsweise liegt die Schichtstärke der erzeugten Deckschichten bei 5 bis 50»m. Als besonders vorteilhaft hat es sich in der Regel erwiesen, die Schichtstärke der Deckschicht der Leiterbahnstärke weitgehend anzupassen, die Deckschicht dabei aber nicht dünner als die Leiterbahn werden zu lassen.

Die Leiterbahn und die Kontaktflächen bestehen aus einem der üblicherweise für die Erzeugung von Leiterbahnen und Kontaktflächen eingesetzten elektronenleitenden Material, z. B. Platin, einer Platinlegierung, z. B. einer Platin-Rhodiumlegierung oder einem Edelmetall-Cermet, z. B. einem Platin-Cermet.

In besonders vorteilhafter Weise können die Leiterbahn und Kontaktflächen ein sinteraktives Stützgerüst aufweisen, das eine weitgehend porenfreie Struktur ermöglicht. Zur Ausbildung von sinteraktiven Stützgerüsten geeignete Stoffe sind z. B. stabilisierte Zirkondioxidpulver. In typischer Weise kann die Leiterbahn somit z. B. zu etwa 60-80 Vol.-% aus einer Pt/Rh-Legierung und zu etwa 40-20 Vol.-% aus einem stabilisierten ZrO₂-Pulver bestehen.

Durch Einsatz der erfindungsgemäßen Deckschicht und bei Verwendung einer Pt-Cermet-Leiterbahn mit sinterkativem Stützgerüst ist eine vollständige Integration der Leiterbahn im Sondenstein dicht unterhalb der Sondensteinoberfläche möglich. Gegebenenfalls kann vor dem Aufbringen der Deckschicht auf die Leiterbahn auf diese zuvor noch eine zusätzliche Isolationsschicht, z. B. aus porös sinterndem Al₂O₃ aufgebracht werden, die die elektrische Isolation der Leiterbahn gegenüber dem Sondengehäuse auch bei erhöhten Temperaturen (> 500°C) gewährleistet.

Die poröse keramische Schutzschicht ist vom üblichen bekannten Typ.

### Zeichnung

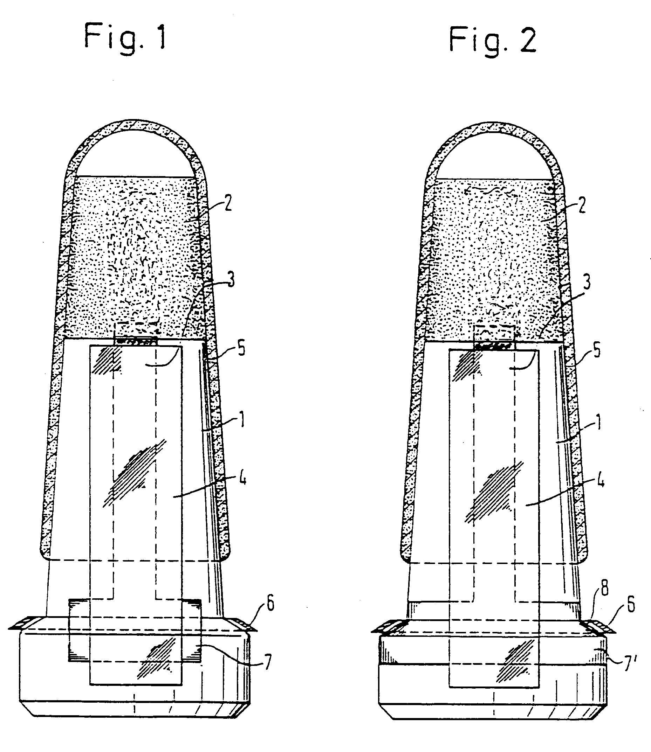

Zwei Ausführungsbeispiele der Erfindung sind in der Zeichnung dargestellt und in der nachfolgenden Beschreibung näher erläutert. Die in den Figuren 1 und 2 beispielsweise dargestellten Meßfühler weisen die Form von einseitig geschlossenen Rohren auf, von denen die äußeren Oberflächen dem zu messenden Gas und die inneren Oberflächen dem Vergleichsgas ausgesetzt sind. Die Meßfühler sind bestimmt für den Einbau in die Abgasleitung eines Verbrennungsmotors eines Kraftwagens zur Erfassung des λ-Wertes und sie sind so aufgebaut, daß sie in eine dafür vorgesehene Gewindebohrung eingeschraubt und über ein Anschlußkabel an die elektronische Steuerung angeschlossen werden können.

### Beschreibung der Ausführungsbeispiele

Die in den Figuren 1 und 2 dargestellten elektrochemischen Meßfühler bestehen in beiden Fällen aus einem Sondenstein 1 aus einem ionenleitenden Festelektrolyten des beschriebenen Typs in Form eines einseitig geschlossenen Rohres, einer nicht dargestellten Innenelektrode, einer auf der äußeren Oberfläche des Sondensteins 1 angeordneten Außenelektrode 2 mit einer anschlußseitigen Leiterbahn 3, der Deckschicht 4, der keramischen Schutzschicht 5, dem metallischen Dichtring 6 sowie den Kontaktierungsflächen 7.

Der wesentliche Unterschied der beiden dargestellten elektrochemischen Meßfühler besteht darin, daß im Falle des in Figur 1 dargestellten Meßfühlers zwei aus dem Bereich der Deckschicht 4 herausragende Kontaktflächen 7 vorgesehen sind, die den Kontakt zum metallischen Dichtring 6 herstellen, während im Falle des in Figur 2 dargestellten Meßfühlers eine in der Dichtkehle 8 des Sondensteins 1 umlaufende Kontaktfläche 7' vorgesehen ist.

Die in Figur 1 dargestellte Ausführungsform ist besonders rationell, da der Edelmetallverbrauch, z. B. Platinverbrauch, für die Erzeugung der Kontaktflächen begrenzt ist. Die in Figur 2 dargestellte Ausführungsform zeichnet sich demgegenüber durch eine besonders zuverlässige Kontaktierung aus, die wiederum eine besonders günstige Lebensdauer des Meßfühlers gewährleistet.

## Patentansprüche

1. Elektrochemischer Meßfühler für die Bestimmung des Sauerstoffgehaltes in Abgasen, insbesondere von Verbrennungsmotoren, mit einem Sondenstein aus einem ionenleitenden Festelektrolyten in Form eines einseitig geschlossenen Rohres, einer Innenelektrode, einer auf der äußeren Oberfläche des Sondensteins angeordneten Außenelektrode mit einer anschlußseitigen Leiterbahn, die eine Deckschicht aufweist, einer keramischen Schutzschicht, sowie einer am Sondenstein angeformten Dichtkehle zur Abdichtung des Referenzgasraumes vom Abgasraum und zum Einsetzen des Meßfühlers in ein Gehäuse, wobei die die Leiterbahn abdeckende Deckschicht auf der Referenzgasseite des Sondensteins bis unter die Dichtzone der Dichtkehle geführt ist, dadurch gekennzeichnet, daß ein metallischer Dichtring (6) zur Herstellung eines elektrischen Kontaktes mit dem Gehäuse vorgesehen ist und daß mindestens eine Kontaktfläche (7) als Fortsetzung der Leiterbahn (3) im Bereich der Dichtzone des Dichtringes (6) aus der Deckschicht (4) herausragt und den metallischen Dichtring (6) kontaktiert.

2. Meßfühler nach Anspruch 1, dadurch gekennzeichnet, daß er zwei aus dem Bereich der Deckschicht (4) herausragende Kontaktflächen (7) aufweist, die den Kontakt zum metallischen Dichtring (6) herstellen.

3. Meßfühler nach Anspruch 1, dadurch gekennzeichnet, daß er eine in der Dichtkehle (8) des Sondensteins umlaufende Kontaktfläche (7') aufweist.

4. Meßfühler nach einem der Ansprüche 1 bis 3, dadurch gekennzeichnet, daß die Deckschicht (4) aus einer dicht sinternden Deckschicht aus der Rohstoffmischung der Sondensteinkeramik mit gleicher oder erhöhter Sinteraktivität besteht.

5. Meßfühler nach einem der Ansprüche 1 bis 4, dadurch gekennzeichnet, daß die Deckschicht (4′) aus stabilisiertem ZrO₂ mit gegebenenfalls einem Flußmittelzusatz besteht.

6. Meßfühler nach einem der Ansprüche 1 bis 5, dadurch gekennzeichnet, daß die Schichtstärke der Deckschicht (4) mindestens der Leiterbahnschichtstärke entspricht.

7. Meßfühler nach Anspruch 6, dadurch gekennzeichnet, daß die Deckschicht (4) eine Schichtstärke von 5 bis 50»m aufweist.

8. Meßfühler nach einem der Ansprüche 1 bis 7, dadurch gekennzeichnet, daß die anschlußseitige Leiterbahn (3) der Außenelektrode (2) eine Cermet-Leiterbahn ist und diese ein Stützgerüst aus stabilisiertem Zirkondioxid aufweist, das mindestens die gleiche Sinteraktivität wie der Sondenstein selbst aufweist.

## Claims

1. Electrochemical measuring sensor for determining the oxygen content in exhaust gases, in particular of internal combustion engines, having a probe block made of an ion-conducting solid electrolyte in the form of a tube closed at one end, an inner electrode, an outer electrode disposed on the external surface of the probe block and having a conductor track on the connection side which has a covering layer, a ceramic protective layer and a sealing groove, integrally formed on the probe block, for sealing the reference gas space from the exhaust gas space and for inserting the measuring sensor in a housing, the covering layer covering the conductor track being brought down on the reference gas side of the probe block to below the sealing zone of the sealing groove, characterised in that a metallic sealing ring (6) for making an electrical contact to the housing is provided and in that at least one contact area (7) projects out of the covering layer (4), as a continuation of the conductor track (3) in the region of the sealing zone of the sealing ring (6), and makes contact with the metallic sealing ring (6).

2. Measuring sensor according to Claim 1, characterised in that it has two contact areas (7) projecting out of the region of the covering layer (4) which make the contact to the metallic sealing ring (6).

3. Measuring sensor according to Claim 1, characterised in that it has a contact area (7') which extends round in the sealing groove (8) of the probe block.

4. Measuring sensor according to any of Claims 1 to 3, characterised in that the covering layer (4) is composed of a densely sintering covering layer made of the raw material mixture of the probe block ceramic having the same or enhanced sintering activity.

5. Measuring sensor according to any of Claims 1 to 4, characterised in that the covering layer (4') is composed of stabilised ZrO₂, optionally with flux addition.

6. Measuring sensor according to any of Claims 1 to 5, characterised in that the layer thickness of the covering layer (4) corresponds at least to the conductor track layer thickness.

7. Measuring sensor according to Claim 6, characterised in that the covering layer (4) has a layer thickness of 5 to 50 »m.

8. Measuring sensor according to any of Claims 1 to 7, characterised in that the conductor track (3) on the connection side of the outer electrode (2) is a cermet conductor track and it has a supporting structure of stabilised zirconium dioxide which has at least the same sintering activity as the probe block itself.

## Revendications

1. Capteur électrochimique pour déterminer la teneur en oxygène des gaz d'échappement provenant notamment de moteurs à combustion interne, comportant un galet de sonde réalisé en un électrolyte solide conducteur d'ions, sous la forme d'un tube fermé d'un côté, d'une électrode intérieure, d'une électrode extérieure prévue sur la surface extérieure du galet de sonde, avec un chemin conducteur du côté du branchement, avec une couche de recouvrement, une couche de protection en matière céramique ainsi qu'une gorge d'étanchéité formée dans le galet de sonde pour protéger le volume de gaz de référence par rapport au volume de gaz d'échappement et pour placer le capteur de mesure dans un boîtier, la couche de recouvrement du chemin conducteur passant sur le côté du gaz de référence du galet de la sonde jusque sous la zone d'étanchéité de la gorge d'étanchéité, caractérisé par un anneau d'étanchéité métallique (6) pour réaliser un contact électrique avec le boîtier, et au moins une surface de contact (7), comme prolongement du chemin conducteur (3), sort de la zone d'étanchéité de l'anneau d'étanchéité (6) de la couche de recouvrement (4) et est en contact avec l'anneau d'étanchéité métallique (6).

2. Capteur selon la revendication 1, caractérisé en ce qu'il comporte deux surfaces de contact (7) sortant de la zone de la couche de recouvrement (4), et qui réalisent le contact avec l'anneau d'étanchéité métallique (6).

3. Capteur selon la revendication 1, caractérisé en ce qu'il comporte une surface de contact (7') entourant la gorge d'étanchéité (8) du galet de sonde.

4. Capteur selon l'une des revendications 1 à 3, caractérisé en ce que la couche de recouvrement (4) est une couche de recouvrement frittée, étanche, formée du mélange de matières premières de la céramique du galet de sonde, avec une activité de frittage égale ou supérieure.

5. Capteur de mesure selon l'une des revendications 1 à 4, caractérisé en ce que la couche de recouvrement (4) est en ZrO₂ stabilisé, avec le cas échéant l'adjonction d'un fondant.

6. Capteur selon l'une des revendications 1 à 5, caractérisé en ce que l'épaisseur de la couche de recouvrement (4) correspond au moins à l'épaisseur de la couche formant le chemin conducteur.

7. Capteur selon la revendication 6, caractérisé en ce que la couche de recouvrement (4) a une épaisseur comprise entre 5 et 50 »m.

8. Capteur selon l'une des revendications 1 à 7, caractérisé en ce que le chemin conducteur (3) de l'électrode extérieure (2), du côté du branchement, est un chemin conducteur en cermet qui comporte une ossature en dioxyde de zirconium stabilisé, ayant au moins la même activité de frittage que le galet de sonde lui-même.
